# EUROPEAN PATENT APPLICATION

(11) **EP 4 840 572 A1**
(43) Date of publication of application: **18.11.2026**
(21) Application number: 26178052.2
(22) Date of filing: 11.05.2026
(51) Int. Cl.: B23K 13/01, B23K 13/06, B23K 20/02, B23K 20/24, B23K 101/06, B23K 101/26

(54) **METHOD OF JOINING A FIRST SEGMENT AND A SECOND SEGMENT**

(30) Priority: 12.05.2025 US 202563803991 P
(71) Applicant: Cheng, Paul Po, London ON N6A 3S9 (CA)
(72) Inventor: Cheng, Paul Po, London ON N6A 3S9 (CA)
(74) Representative: Murgitroyd & Company

(57) **Abstract**

The disclosure provides a method of joining a first segment and a second segment that are positioned to define a gap therebetween. The method includes shaping respective first and second end faces of the first and second segments to provide respective first and second engagement surfaces thereon.

An insert is provided to fit in the gap. The insert includes on or more insert faces formed to mate with the first and second engagement surfaces. Next, one or more insert heated portions of the insert are heated in an inert atmosphere to a hot working temperature. First and second segment heated portions are also heated in the inert atmosphere to the hot working temperature.

While the insert heated portion, the first segment heated portion, and the second segment heated portion are at the hot working temperature, the insert is subjected to an engagement motion, to move the insert relative to the first and second segments.

While the insert heated portion, the first segment heated portion, and the second segment heated portion are at the hot working temperature and while the insert is subjected to the engagement motion, the insert is subjected to a translocation motion, in which the insert is moved into the gap to engage the insert faces with the respective first and second engagement surfaces.

The insert and the first and second segments are allowed to cool, wherein the insert and the first segment are bonded together across a first bonded zone that extends across the insert face and the first engagement surface that are engaged with each other, and wherein the insert and the second segment are bonded together across a second bonded zone that extends across the insert face and the second engagement surface that are engaged with each other.

## Description

### Cross-reference to other applications

The disclosure claims priority from US Provisional Application No. 63/803,991 filed May 12, 2025 which is hereby incorporated by reference.

### Field

The disclosure is generally directed at metallurgy and, more specifically, at a method of in situ modification of workpieces.

### Background

Currently, joining segments of rail or tubing that are not movable presents a challenge. Most conventional welding methods are not suitable for welding a new length of rail between two immovable rail segments.

The typical approach is to position a new piece of rail between the two immovable rail segments with little or minimal clearance between the new piece and the immovable rail segments, and to fill the small gaps at the ends of the new piece using thermite.

As is well known in the art, thermite is a product used in an exothermic welding process in which reactants are mixed together and placed in a mold located in the small gaps between the ends of the new piece of rail and the immovable rail segments. The reactants are typically in powder form and held together by a binder. Once the reactants are combined, an aluminothermic reaction ensues, in which powdered metal is melted, and the molten metal is then positioned in the mold. As the molten metal cools, it bonds with the new piece of rail and the ends of the immovable rail segments. After cooling, the mold is removed.

However, the thermite process has a number of disadvantages. The high heat that is generated produces a heat-affected zone in which a distortion of the microstructure weakens the weld joint and the ends of the immovable rail segments and the new piece to which the weld is bonded. Also, the weld joint that results typically includes slag contamination that also weakens the weld joint where repeated repairs of the weld joint produced by the thermite process are common.

### Summary

For the foregoing reasons, there is a need for a method of in situ modification of workpieces that overcomes or mitigates one of more of the defects or deficiencies of current solutions.

In its broad aspect, the disclosure provides a method of joining a first segment and a second segment that are positioned to define a gap therebetween. The method includes shaping respective first and second end faces of the first and second segments to provide respective first and second engagement surfaces thereon.

An insert is provided to fit in the gap. The insert includes on or more insert faces formed to mate with the first and second engagement surfaces. Next, one or more insert heated portions of the insert are heated in an inert atmosphere to a hot working temperature. First and second segment heated portions are also heated in the inert atmosphere to the hot working temperature.

While the insert heated portion, the first segment heated portion, and the second segment heated portion are at the hot working temperature, the insert is subjected to an engagement motion, to move the insert relative to the first and second segments.

While the insert heated portion, the first segment heated portion, and the second segment heated portion are at the hot working temperature and while the insert is subjected to the engagement motion, the insert is subjected to a translocation motion, in which the insert is moved into the gap to engage the insert faces with the respective first and second engagement surfaces.

The insert and the first and second segments are allowed to cool, wherein the insert and the first segment are bonded together across a first bonded zone that extends across the insert face and the first engagement surface that are engaged with each other, and wherein the insert and the second segment are bonded together across a second bonded zone that extends across the insert face and the second engagement surface that are engaged with each other.

Accordingly there is provided a method as detailed in claim 1. Advantageous embodiments are in the dependent claims.

### Brief Description of the Drawings

The disclosure will be better understood with reference to the attached drawings, in which:
Fig. 1A is a longitudinal section of two immovable pipe segments defining a gap therebetween and an embodiment of a pipe insert of the disclosure positioned for insertion in the gap;
Fig. 1B is a top view of the immovable pipe segments and the pipe insert of Fig. 1A;
Fig. 1C is a longitudinal section of the immovable pipe segments of Fig. 1A with the pipe insert positioned in the gap;
Fig. 1D is a top view of the immovable pipe segments and the pipe insert of Fig. 1C;
Fig. 1E is a cross-section taken along line C-C' in Fig. 1D;
Fig. 1F is a longitudinal section of the immovable pipe segments with the pipe insert secured therebetween and modified to form an assembly;
Fig. 1G is a top view of the assembly of Fig. 1F;
Fig. 2A is a side view of two immovable rail segments defining a gap between the rail segments and an embodiment of a rail insert of the disclosure positioned for insertion in the gap;
Fig. 2B is a top view of the immovable rail segments and the rail insert of Fig. 2A;
Fig. 2C is a side view of the immovable rail segments of Fig. 2A with the rail insert positioned in the gap;
Fig. 2D is a top view of the immovable rail segments and the rail insert of Fig. 2C;
Fig. 2E is a cross-section taken along line **D-D'** in Fig. 2D;
Fig. 2F is a side view of the immovable rail segments with the rail insert secured therebetween and modified to form an assembly;
Fig. 2G is a top view of the assembly of Fig. 2F;
Fig. 3A is a side view of two immovable rail segments with a rail insert including a lower insert portion positioned in a gap therebetween, and another embodiment of an upper insert portion of the disclosure positioned for insertion on the lower insert;
Fig. 3B is a top view of the immovable rail segments and the rail insert of Fig. 3A;
Fig. 3C is a side view of the immovable rail segments of Fig. 3A with the upper insert portion positioned in the gap and on the lower insert portion;
Fig. 3D is a top view of the immovable rail segments and the rail insert of Fig. 3C;
Fig. 3E is a side view of the immovable rail segments with the upper insert portion modified and secured therebetween to form an assembly; and
Fig. 3F is a top view of the assembly of Fig. 3E.

### Detailed Description

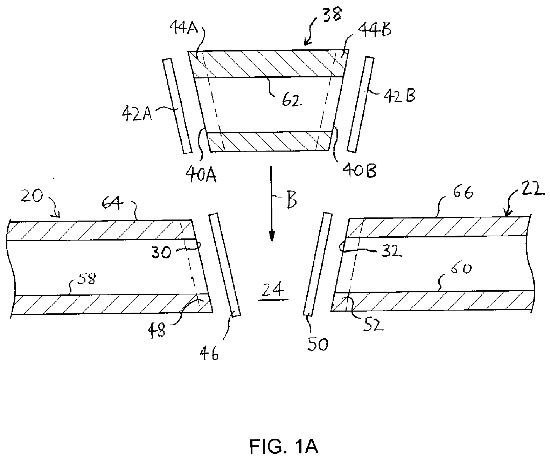

In the attached drawings, like reference numerals designate corresponding elements throughout. Reference is first made to Figs. 1A-1G to describe an embodiment of a method in accordance with the disclosure.

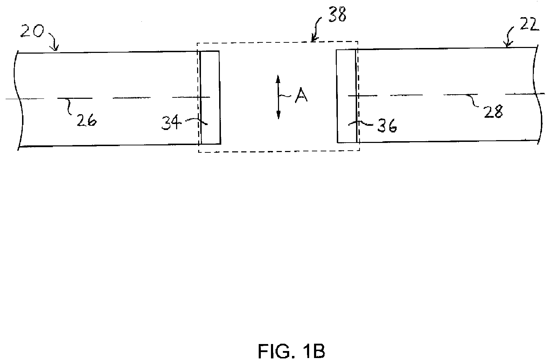

As will be described, the method is for joining a first segment or segment of a first workpiece 20 and a second segment or segment of a second workpiece 22 that are positioned to define a gap 24 therebetween. Each of the first and second segments 20, 22 defines a respective axis 26, 28 thereof (Fig.1B). In one embodiment, the method includes shaping respective first segment and second segment end faces 30, 32 of the first and second segments 20, 22 to provide respective first segment and second segment engagement surfaces 34, 36 thereon (Figs.1A, 1B).

In order to join the first 20 and second 22 segments, an insert 38 is provided that is configured to fit into the gap 24. The insert 38 includes one or more insert faces formed to mate with the first segment and second segment engagement surfaces 34, 36, as will be described below. For convenience, the insert faces that are formed for engagement with the respective first segment and second segment engagement surfaces 34, 36 are identified in Fig. 1A by reference characters 40A, 40B.

In the example or embodiment illustrated in Figs. 1A-1G, the first and second segments 20, 22 and the insert 38 are segments of tubes that are be combined or connected to form an assembly thereof. The first and second segments 20, 22 and the insert 38 may be made of any suitable metal, e.g., a suitable steel. In Fig. 1B, a top surface of the insert 38 is outlined in dashed lines for clarity of illustration.

It will also be understood that, in the example illustrated, the segments 20, 22 are secured in place, i.e., they are not movable. The segments 20, 22 may be parts of a pre-existing system of tubes or tube system. In some embodiments, the gap 24 may be formed by removal of a damaged or defective portion of a pre-existing tube system (not shown) to produce the gap 24 between two different segments 20, 22 where the first segment and second segment end faces 30, 32 are formed by removing the damaged or defective portion of the pre-existing tube system. In other embodiments, the insert may be part of a new build to connect different sections of a tube system together.

In some embodiments, the first segment and second segment end faces 30, 32 may be generally or roughly formed when the damaged or defective portion of the pre-existing tube system is removed, e.g., by cutting into the pre-existing tube system, with suitable devices. However, more work may be required in order to form the first segment and second segment engagement surfaces 34, 36, e.g., by machining and otherwise processing the end faces 30, 32 until they are suitable for engagement and bonding with the respective insert faces 40A, 40B of the insert 38.

In the example illustrated in Figs. 1A-1G, the end faces 30, 32 are generally formed to define substantially the same acute angle relative to the horizontal, oriented in opposite directions. Alternatively, the end faces 30, 32 may be oriented at different angles relative to the horizontal. The insert faces 40A, 40B are formed to mate with the angled engagement surfaces 34, 36 when the insert 38 is positioned in the gap 24 regardless of the angles of the engagement surfaces 34, 36 relative to the horizontal.

In some embodiments, the orientation of the first segment and second segment end faces 30, 32 depend, to an extent, on the accessibility of the segments 20, 22 after the damaged portion has been removed. The segments illustrated in Figs. 1A-1G are drawn to indicate that the segments 20, 22 are resting on a surface, e.g., the ground (not shown). Those skilled in the art would appreciate that, if the segments were only accessible from other angles, such as the bottom thereof, then the end faces 30, 32 would be oriented differently.

With one or more insert heating elements 42A, 42B, portions 44A, 44B of the insert may be heated in an inert atmosphere to a hot working temperature. These portions may be seen as heated portion or insert heated portions 44A, 44B of the insert 38. A hot working temperature may be defined as a temperature of a metal where plastic deformation occurs. For clarity of illustration, heating elements 42A, 42B are identified on each side of the insert 38 in Fig. 1A although in other embodiments, a different number of heating elements may be used.

Those skilled in the art would appreciate that the inert atmosphere may be provided by a suitable non-oxidizing gas or gases, e.g., argon where the non-oxidizing gas may be held in place by a suitable container (not shown). Those skilled in the art would be aware of suitable containers. It will be understood that the container and the inert atmosphere are omitted from the drawings for clarity of illustration.

With one or more first segment heating elements 46, a portion 48 of the first segment 20 is heated to its hot working temperature in an inert atmosphere. The portion 48 may be referred to as a first segment heated portion 48 of the first segment 20. Similarly, with one or more second segment heating elements 50, a portion 52 of the second segment 22 is heated to its hot working temperature in an inert atmosphere. The portion 52 may be seen as a second segment heated portion 52. While the insert heated portions 44A, 44B and the first and second segment heated portions 48, 52 are at their hot working temperatures, they are plastically deformable. It is understood that if the metals with which the insert 38 and the first and second workpieces 20, 22 are manufactured are the same, the hot working temperatures for each of the heated portions 44A, 44B, 48 and 52 are approximately the same but if the metals are not the same, the hot working temperatures of the heated portions may be different.

Those skilled in the art would appreciate that the heated portions 44A, 44B, 48, 52 may be heated by any suitable method. In some embodiments, the different heated portions are heated using induction heating.

It will be understood that the extent or size of the heated portions 44A, 44B, 48, 52 has been exaggerated in the drawings, for clarity of illustration.

Once the insert heated portions 44A, 44B and the first and second segment heated portions 48, 52 are at their hot working temperature or temperatures, the insert heating elements 42A, 42B and the first and second segment heating elements 48, 50 are removed, to enable the insert 38 to be moved and engaged with the first and second segments 20, 22, as described below.

While the insert heated portions 44A, 44B, the first segment heated portion 48, and the second segment heated portion 52 are at their hot working temperature or temperatures, the insert 38 is subjected to an engagement motion to move the insert 38 relative to the respective axes 26, 28 of the first and second segments 20, 22. As an example of the engagement motion, the insert 38 may be oscillated in the directions indicated by arrow "A" in Fig. 1B. The engagement motion may be any suitable motion or motions, which may or may not be repeated at regular intervals.

While the insert heated portions 44A, 44B, the first segment heated portion 48, and the second segment heated portion 52 are at their hot working temperature or temperatures, and while the insert 38 is subjected to the engagement motion, the insert 38 is also subjected to a translocation motion, in which the insert 38 is moved into the gap 24 to engage the insert faces 40A, 40B with the respective first segment and second segment engagement surfaces 34, 36. This also causes the insert heated portions 44A, 44B to engage with the first and second segment heated portions 48, 52. The direction of the translocation motion is schematically represented by arrow "B" in Fig. 1A.

While the insert faces 40A, 40B are respectively engaged with the first segment and second segment engagement surfaces 34, 36, and while the insert 38 is at the same time subjected to the engagement motion, the insert 38 is continually urged (in the direction of arrow "B") into the gap 24, so that the respective insert faces 40A, 40B are urged against the first and second engagement surfaces 34, 36. It will be understood that the engagement motion, and such urging or pressing of the insert 38, continue while the insert heated portions 44A, 44B and the first and second segment heated portions 48, 52 are at their hot working temperature or temperatures.

The engagement motion preferably ceases when the temperature of the heated portions 44A, 44B, 48, 52 falls below their hot working temperature or temperatures. In some embodiments, this may be monitored via a pyrometer. At that point, the insert 38 is seen as being metallurgically bonded with the first and second segments 20, 22.

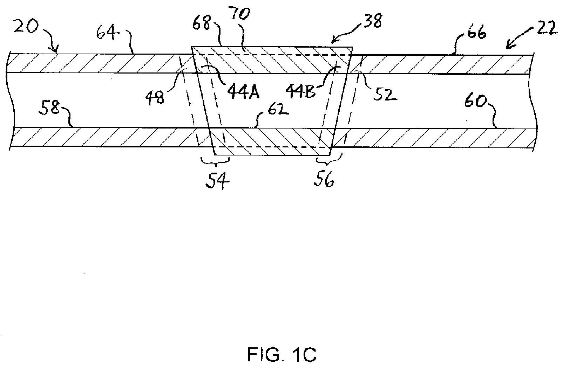

The insert 38 and the first and second segments 20, 22 are then allowed to cool, e.g., to an ambient temperature. When the heated portions 44A, 44B, 48, 52 are at a temperature that is less than their hot working temperature or temperatures, the insert 38 and the first segment 20 are seen as being metallurgically bonded together across a first bonded zone 54 that extends across the insert face 40A and the first segment engagement surface 34 that are engaged with each other (Fig. 1C). At that time, the insert 38 and the second segment 22 are also seen as being metallurgically bonded together across a second bonded zone 56 that extends across the insert face 40B and the second segment engagement surface 36 that are engaged with each other (Fig. 1C). It will be understood that the bonded zones 54, 56 are very narrow. The extent of the bonded zones 54, 56 is exaggerated in Fig. 1B, for clarity of illustration.

Due to the engagement motion that occurs while the insert face 40A and the first segment engagement surface 34 are engaged and urged together, the metal in the insert heated portion 44A and the metal in the first segment heated portion 48 are subjected to shearing. The metal in the insert heated portion 44A and the metal in the first segment heated portion are also plastically deformed, and when cooled thereafter, the heated portions 44A, 48 are at least partially bonded together, to form the first bonded zone 54. Also, due to such plastic deformation, the insert face 40A and the first segment engagement surface 34 are at least partially subsumed in the first bonded zone 54.

Similarly, due to the engagement motion that occurs while the insert face 40B and the second segment engagement surface 36 are engaged and urged together, the metal in the insert heated portion 44B and the metal in the second segment heated portion 52 are subjected to shearing and are plastically deformed. When cooled thereafter, the heated portions 44B, 52 are at least partially bonded together, to form the second bonded zone 56. Also, due to such plastic deformation, the insert face 40B and the second segment engagement surface 36 are at least partially subsumed in the second bonded zone 56.

It will be understood that the microstructure of the metal in the bonded zones 54, 56 is modified due to the plastically deformable metal in those zones being subjected to shearing during the engagement motion, when the insert faces and the segment engagement surfaces are engaged as described above. As a result, the microstructure of the metal in the bonded zones 54, 56 is relatively uniform, and relatively fine-grained. The metal in the bonded zones 54, 56 does not have the undesirable characteristics that result from heating metal to its melting temperature before cooling, which is the case when conventional welding is used. It is understood that the hot working temperature of a metal is less than a melting temperature of the same metal.

As can be seen in Fig. 1A, the first and second segments 20, 22 are tubes that include respective internal surfaces 58, 60. In the current embodiment, the insert 38 is also a tube that includes an internal surface 62. It is preferred that, when the insert 38 is positioned in the gap 24, the internal surface 62 is aligned with the internal surfaces 58, 60 when the insert and the first and second segments are engaged.

Furthermore, the first and second segments 20, 22 include respective upper first segment and second segment external surfaces 64, 66, and the insert 38 includes an upper external surface 68. It will be understood that as can be seen in Fig. 1A, the upper external segment surfaces 64, 66 are exposed when the first and second segments 20, 22 are located to define the gap 24.

Those skilled in the art would appreciate that, because an operator (not shown) controlling the engagement motion does not know in advance (during the engagement motion) when the metallurgical bond will form, in some embodiments, the insert 38 has a cross-sectional area that is larger than the cross-sectional areas of the segments 20, 22. It is understood that an optimal timing may be pre-determined whereby when the method of the disclosure is being performed, the method is performed with respect to the predetermined optimal times and the method adjusted accordingly.

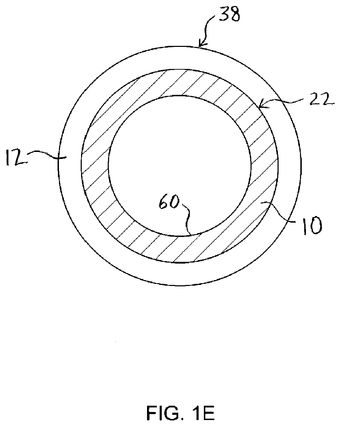

As can be seen in Fig. 1E, in one embodiment, the segment 22 has a cross-sectional area 10. In the embodiment illustrated, the insert 38 extends radially outwardly in all directions relative to the axis of the insert 38. In Fig. 1E, the part of the insert 38 that extends radially beyond the segment 22 is identified by reference character 12.

It will be understood that the cross-sectional area of the first segment 20 (not shown) is approximately equal to the cross-sectional area of the second segment 22 and that the relationship between the insert 38 and the first segment 20 is the same as the relationship between the insert 38 and the second segment 22.

When the insert 38 is metallurgically bonded to the first and second segments 20, 22, in addition to the upper external surface 68 of the insert extending beyond the upper external surfaces 64, 66 of the first and second segments 20, 22, the insert's internal surface 62 may be misaligned with the internal surfaces 58, 60 of the segments 20, 22. However, for clarity of illustration, the internal surface 62 is shown in Fig. 1C as being aligned with the internal surfaces 58, 60. It will be understood that, if the internal surface 62 is misaligned with the internal surfaces 58, 60 after the insert 38 is bonded with the segments 20, 22, then the internal surfaces 58, 60 (or the internal surface 62) may be adjusted for improved alignment thereof.

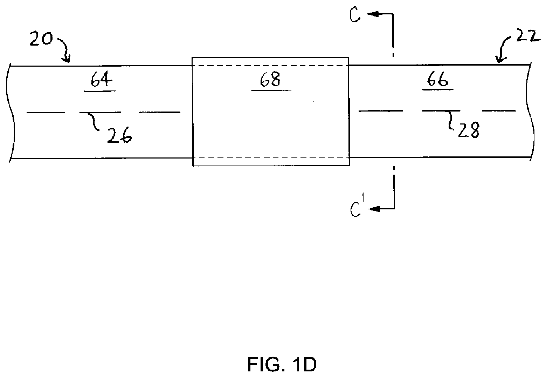

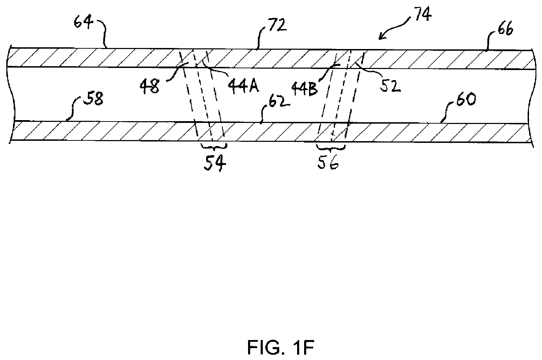

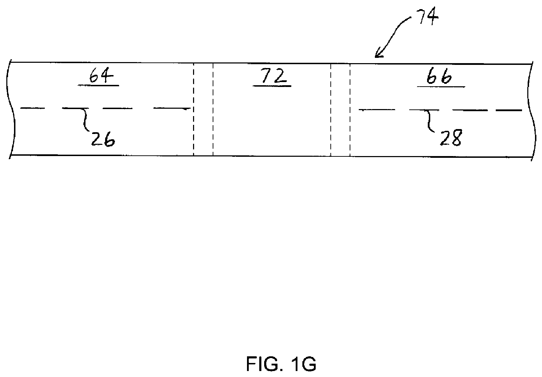

An example is shown in Fig. 1C, in which the insert 38 is shown when first positioned in the gap 24 and secured to the first and second segments 20, 22 (as shown in Figs. 1C and 1D). In this example, the upper external surface 68 of the insert 38 (illustrated in Fig. 1C) extends outwardly beyond the upper external surfaces 64, 66. In one embodiment, an outer portion 70 (which may be seen as an excess outer portion) of the insert 38 is thereafter removed to expose a modified upper external surface 72 of the insert 38 that is aligned with the upper external surfaces 64, 66 of the first and second segments 20, 22, as shown in Figs. 1F and 1G. Those skilled in the art would appreciate that the outer portion 70 may be removed using any suitable method. In other embodiments, the outer portion 70 may not be required to be removed.

As noted above, in the example illustrated in Figs. 1A-1G, the first and second segments 20, 22 and the insert 38 are tubing or pipe. As can be seen in Figs. 1F and 1G, the foregoing embodiment of the method of the disclosure produces an assembly 74 in which the first and second segments 20, 22 and the insert 38 are joined together and in which the internal surfaces 58, 60, and 62 are preferably aligned. Also, as illustrated, the modified upper external surface 72 and the upper external surfaces 64, 66 are preferably aligned in the assembly 74.

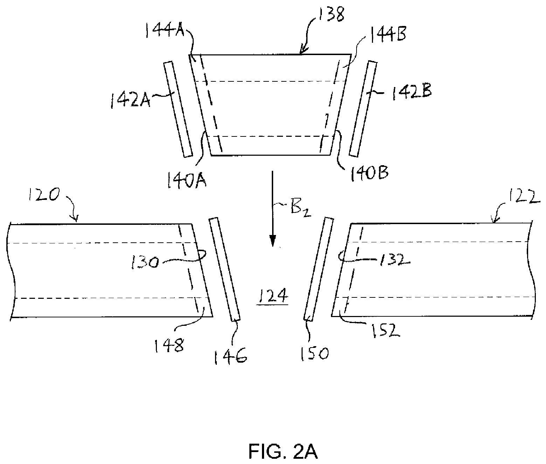

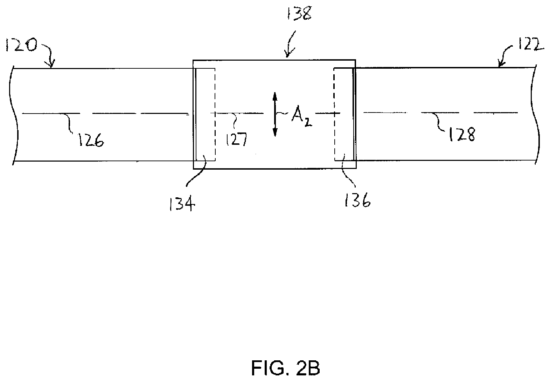

In another embodiment, illustrated in Figs. 2A-2G, a method for joining a first segment 120 and a second segment 122, the segments being immovable rails is shown. The segments 120, 122 are positioned to define a gap 124 therebetween (Fig. 2A). For example, a damaged portion of a full rail may be removed from between the ends of the first and second segments 120, 122 to define the gap 124. Each of the first and second segments 120, 122 defines a respective center line 126, 128 thereof (Fig. 2B). In one embodiment, the method includes processing respective first segment and second segment end faces 130, 132 of the first and second segments 120, 122 to provide respective first segment and second segment engagement surfaces 134, 136 thereon.

As discussed above, in practice, the gap 124 may be created, for example, by removing a damaged or defective portion of a pre-existing rail system, thereby forming the segments 120, 122 defining the gap 124 therebetween. It will be understood that the first segment and second segment end faces 130, 132 may be formed by removing the pre-existing damaged or defective portion (not shown). It will also be understood that, in the example illustrated, the segments 120, 122 are secured in place, i.e., they not movable. The segments 120, 122 are understood to be remaining parts of the pre-existing rail system.

Another rail element, namely an insert 138, preferably is that is configured to fit generally into the gap 124. As will be described, it is preferred that the rail insert 138 has a cross-section that is larger than the respective cross-sections of the rail segments 120, 122. While discussed above as being used to replace damaged rail sections, in other embodiments, the insert may be used to connect different parts of an existing rail system such as to connect Y joints together or to connect a Y joint to a straight piece of rail.

The insert 138 includes one or more insert faces formed to mate with the first segment and second segment engagement surfaces 134, 136. For convenience, the insert faces that are formed for engagement with the respective engagement surfaces 134, 136 are identified in Fig. 2A by reference characters 140A, 140B.

In some embodiments, the damaged portion may be removed by cutting into the pre-existing rail system, with suitable devices. When the damaged or defective portion of the pre-existing rail system is removed, the first and second end faces 130, 132 may be generally or roughly formed whereby more work may be required in order to form or prepare the first segment and second segment engagement surfaces 134, 136, e.g., by machining and otherwise processing the end faces 130, 132 until they are suitable for engagement and bonding with the respective insert faces 140A, 140B of an insert 138. In some embodiments, the end faces are processed to be relatively smooth and configured for mating with the insert faces.

In the example illustrated in Figs. 2A-2G, the end faces 130, 132 are generally formed to define substantially the same angle relative to the horizontal, oriented in opposite directions. The insert faces 140A, 140B of the insert 138 are formed to mate with the first segment and second segment engagement surfaces 134, 136 when the insert 138 is positioned in the gap 124. It is appreciated that other arrangements or positioning of the first and second segment end faces are possible, e.g., the end faces 130, 132 may be formed at different angles relative to the horizontal.

The first and second segments 120, 122 and the insert 138 preferably are made of any suitable metal, e.g., a suitable steel of different grades of steel.

As noted above, the rail segments 120, 122 define the respective center lines 126, 128 thereof. As can be seen in Fig. 2B, the center lines 126, 128 are aligned. The rail insert 138 also defines a center line 127 thereof. In Fig. 2B, the rail insert 138 is shown positioned where its center line 127 is aligned with the center lines 126, 128 of the first and second rail segments. As will be described, when the rail insert 138 is subjected to an engagement motion thereof, the rail insert 138 is repeatedly moved laterally (e.g., oscillated) relative to the rail segments 120, 122, so that the center line 127 is generally unaligned with the center lines 126, 128 during the engagement motion.

Using one or more insert heating elements 142A, 142B, portions, which may be seen as insert heated portions 144A, 144B, of the insert 138 are heated in an inert atmosphere to a hot working temperature. When the insert heated portions 144A, 144B are at their hot working temperature, they are plastically deformable.

Those skilled in the art would appreciate that the inert atmosphere may be provided by a suitable non-oxidizing gas or gases, e.g., argon that is held in place by a suitable container (not shown). It will be understood that the container and the inert atmosphere are omitted from the drawings for clarity of illustration.

Using one or more first segment heating elements 146, a portion 148 of the first segment 120 (which can be seen as a first segment heated portion 148) is heated in the inert atmosphere to its hot working temperature. Similarly, using one or more second segment heating elements 150, a portion 152 of the second segment (122) (which can be seen as a second segment heated portion 152) is heated in the inert atmosphere to its hot working temperature.

Those skilled in the art would appreciate that the heated portions 144A, 144B, 148, 152 may be heated by any suitable method such as, but not limited to, induction heating. Once the heated portions are at their hot working temperature, the heating elements are removed or withdrawn.

It will be understood that the extent or size of the heated portions 144A, 144B, 148, 152 has been exaggerated in the drawings, for clarity of illustration.

While the insert heated portions 144A, 144B, the first segment heated portion 148, and the second segment heated portion 152 are all at their hot working temperature or temperatures, the insert 138 is subjected to the engagement motion, to move the insert 138 laterally relative to the first and second segments 120, 122. As an example of the engagement motion, the insert 138 may be oscillated in the directions indicated by arrow "A₂" in Fig. 2B.

The engagement motion may be any suitable motion or motions of the rail insert 138, which may or may not be repeated at regular intervals. As noted above, during such engagement motion, the center line 127 of the rail insert 138 is generally unaligned with the center lines 126, 128 of the rail segments 120, 122.

While the insert heated portions 144A, 144B, the first segment heated portion 148, and the second segment heated portion 152 are at the hot working temperature, and while the insert 138 is subjected to the engagement motion, the insert 138 is also subjected to a translocation motion, in which the insert 138 is moved into the gap 124 to engage the insert faces 140A, 140B with the respective first segment and second segment engagement surfaces 134, 136. The translocation motion is indicated by arrow "B₂" in Fig. 2A.

Alternatively, the insert 138 may be subjected to the translocation motion first, and the engagement motion may commence when the insert faces 140A, 140B are engaged with the first segment and second segment engagement surfaces 134, 136.

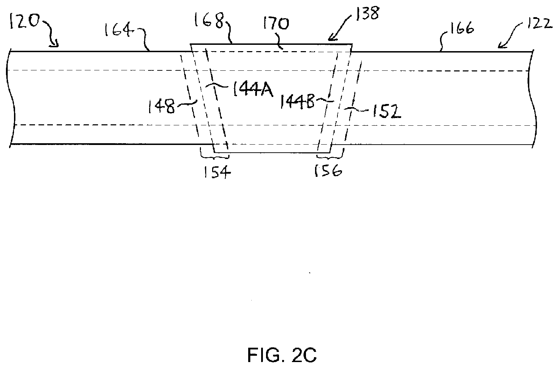

While the insert 138 is subjected to the engagement motion and the insert faces 140A, 140B are engaged with the engagement surfaces 130, 132, the insert 138 and the first and second segments 120, 122 are allowed to cool, e.g., to a temperature less than their hot working temperature or temperatures. When the heated portions 144A, 144B, 148, 152 are at a temperature that is less than their hot working temperature or temperatures, the insert 138 and the first segment 120 are seen as being metallurgically bonded together across a first bonded zone 154 that extends across the insert face 140A and the first engagement surface 134 where they are engaged with each other (Fig. 2C). Similarly, the insert 138 and the second segment 122 are also bonded together across a second bonded zone 156 that extends across the insert face 140B and the second engagement surface 136 that are engaged with each other (Fig. 2C) whereby the insert 138 and the second segment 122 are seen as being metallurgically bonded together.

Due to the engagement motion that occurs while the insert face 140A and the first engagement surface 134 are engaged and urged together, the metal in the insert heated portion 144A and the first segment heated portion 148 are subjected to shearing and plastically deformed, and when cooled thereafter, the insert heated portion 144A and the first segment heated portion 148 are at least partially bonded together, to form the first bonded zone 154. Also, due to such plastic deformation, the insert face 140A and the first engagement surface 134 are at least partially subsumed in the first bonded zone 154.

Similarly, due to the engagement motion that occurs while the insert face 140B and the second engagement surface 136 are engaged and urged together, the metal in the insert heated portion 144B and the second segment heated portion 152 are subjected to shearing and plastically deformed, and when cooled thereafter, the insert heated portion 144B and the second segment heated portion 152 are at least partially bonded together, to form the second bonded zone 156. Also, due to such plastic deformation, the insert face 140B and the second engagement surface 136 are at least partially subsumed in the second bonded zone 156.

**It** will be understood that the microstructure of the metal in the bonded zones 154, 156 is modified due to the plastically deformable metal in those zones being subjected to shearing during the engagement motion, when the insert faces and the engagement surfaces are engaged as described above. As a result, the microstructure of the metal in the bonded zones 154, 156 is relatively uniform, and relatively fine-grained. The metal in the bonded zones 154, 156 does not have the undesirable characteristics that result from heating metal to its melting temperature before cooling, which is the case when conventional welding is used.

It will be understood that the bonded zones 154, 156 are very small, and the size or extent of the bonded zones 154, 156 is exaggerated in Fig. 2B, for clarity of illustration. The heating elements 142, 146, and 150 are omitted from Fig. 2B for clarity of illustration.

The first and second segments 120, 122 include respective upper external surfaces 164, 166, and the insert 138 includes an upper external surface 168. As can be seen in Fig. 2A, the upper external surfaces 164, 166 are exposed when the first and second segments 120, 122 are located to define the gap 124.

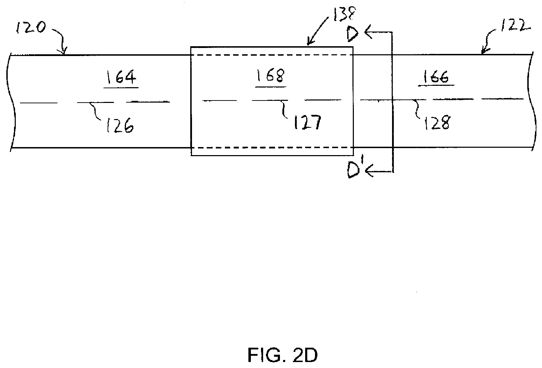

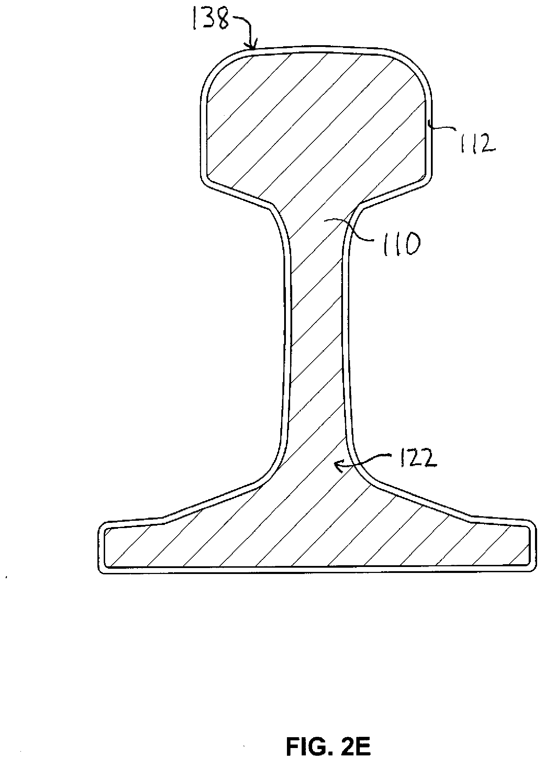

The rail insert 138 is shown bonded with the rail segments 120, 122 in Fig. 2D. As can be seen in Fig. 2E, the rail insert 138 has a larger cross-section than the respective cross-sections of the rail segments 120, 122. For example, the extent to which the rail insert 138 is wider than the rail segment 122 can be schematically seen in Fig. 2E.

It will be understood that the first and second rail segments 120, 122 have the same cross-sections. The extent to which the rail insert's cross-section is larger than those of the rail segments can be seen in Fig. 2E.

It will also be understood that, for clarity of illustration, the rail insert 138 is being centered, or partially centered, relative to the rail segment 122. The cross-section of the rail segment 122 is identified in Fig. 2E by reference character 110. The part of the rail insert 138 that extends outwardly (i.e., away from the center line 127) beyond the rail segment 122 is identified in Fig. 2E by reference character 112.

Because the rail insert's cross-section is larger than that of each of the rail segments 120, 122, the respective areas of the insert faces 140A, 140B are larger than those of the first segment and second segment end faces 130, 132. In other words, while the rail insert 138 is subjected to the engagement motion, the rail insert 138 may be moved relative to the rail segments 120, 122, while remaining constantly engaged with the rail segments 120, 122. The engagement motion is limited so that the insert faces 140A, 140B remain engaged with the engagement surfaces 130, 132 while the rail insert 138 is subjected to the engagement motion. It is understood that the engagement motion may be applied by a set of motors and corresponding apparatus whereby the amount of level of motion experienced by the insert can be controlled.

Those skilled in the art would appreciate that, during the engagement motion, some of the insert heated portions (i.e., plastically deformable metal) may bulge outwardly from the center of the insert.

The engagement motion continues until the temperature of the heated portions falls below their hot working temperature or temperatures. When this occurs, the rail insert 138 and the rail segments 120, 122 are seen to be metallurgically bonded together. That is, the engagement motion ceases when the rail insert 138 becomes metallurgically bonded with the rail segments 120, 122.

Those skilled in the art would also appreciate that the rail insert 138 may be only approximately centered relative to the rail segments 120, 122, when the metal in the bonded zones 154, 156 has solidified.

From the foregoing, it can be seen that, in practice, because the rail insert 138 becomes metallurgically bonded to the rail segments 120, 122 when the temperature of its heated portions 144A, 144B falls below their hot working temperature, it is important to at least approximately align the rail insert 138 with the rail segments 120, 122 at the time when the bonding takes place.

For this reason, the rail insert 138 has a cross-section 112 that is greater than the cross-section if the rail segments 120, 122. As can be seen in Fig. 2E, in one embodiment, the foot, web, and rail head of the rail insert 138 have respective profiles that are substantially the same as those of the rail segments 120, 122, except that the cross-section of the rail insert 138 is larger than the cross-sections of the rail segments.

In one embodiment, to the extent that the cross-sectional area of the rail insert 138 exceeds the cross-sectional area of the rail segments 120, 122, the cross-sectional area of the rail insert 138 is reduced after it is bonded to the segments 120, 122, so that exterior surfaces of the head, web, and foot of the rail insert 138 are aligned, or substantially aligned, with the corresponding respective exterior surfaces of the rail segments 120, 122. Some of the excess metal to be trimmed or cut away may be metal that had been plastically deformed and bulged outwardly from the center of the insert 138 during the engagement motion. The metal required to be removed from the rail insert 138 to achieve this reduction may be removed using any suitable method. Those skilled in the art would be aware of suitable methods.

Although sufficient material should be removed from the insert 138 such that the surfaces of the head of the insert 138 and the heads of the rail segments 120, 122 are somewhat horizontally aligned, alignment of the other surfaces of the insert 138 and the rail segments 120, 122, or of some of such other surfaces, may not be necessary, depending on the circumstances.

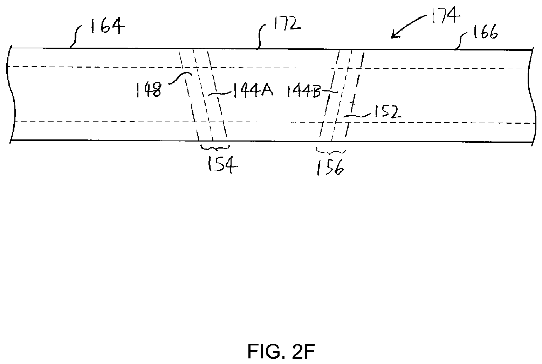

For example, as can be seen in Fig. 2C, when the insert 138 is first positioned in the gap 124 and secured to the first and rail second segments 120, 122, the upper external surface 168 of the insert 138 extends outwardly beyond the upper external surfaces 164, 166, and is not vertically aligned with the upper external surfaces 164, 166. After the insert 138 is bonded to the segments 120, 122, an upper outer portion 170 of the insert 138 is removed to expose a modified upper external surface 172 of the insert 138 that is horizontally aligned with the upper external surfaces 164, 166 of the first and second segments 120, 122 (Figs. 2C, 2F). Those skilled in the art would appreciate that the upper outer portion 170 may be removed using any suitable method.

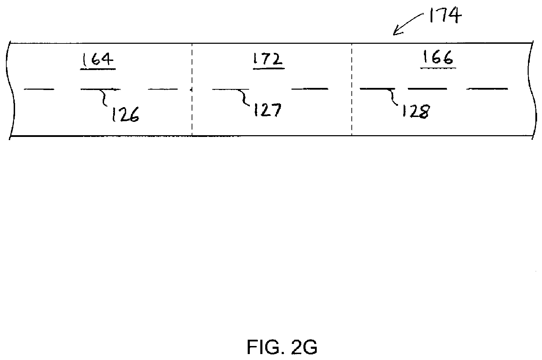

As can be seen in Figs. 2F and 2G, the foregoing embodiment of the method of the disclosure results in the first and rail second segments 120, 122 and the insert 138 being joined together to form an assembly 174 in which the modified upper external surface 172 and the upper external surfaces 164,166 are aligned.

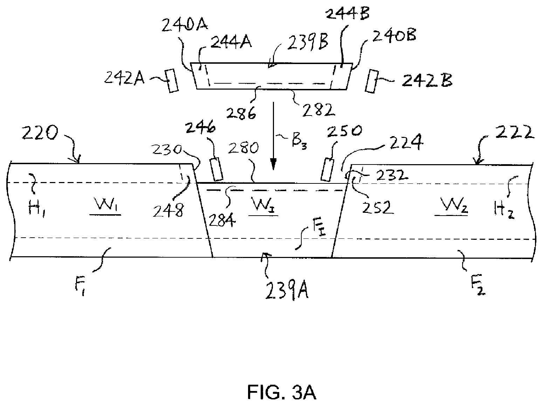

In another embodiment of the disclosure (as shown in Figs. 3A to 3F), schematic diagrams showing the connection of a rail insert subassembly 238 between two rail segments (a first rail segment 220 and a second rail segment 222) are provided.

The rail insert subassembly 238 includes a lower insert portion 239A and an upper insert portion 239B whereby the lower insert portion 239A is first positioned in a gap 224 between the two rail segments 220, 222 (Fig. 3A). As with the embodiments discussed above, the gap 224 may be formed, for example, by removing a defective or worn part (not shown) of the rail system that is required to be replaced.

In one embodiment, the lower insert portion 239A is secured to the first and second rail segments 220, 222 by any suitable conventional welding techniques.

As can be seen in Fig. 3A, the lower insert portion 239A includes web and foot parts "W_{I}", "F_{I}" thereof that are aligned with the web and foot parts "W₁", "F₁", "W₂", "F₂" of the respective first and second rail segments 220, 222. In the embodiment illustrated, the upper insert portion 239B forms a head portion that is similar to head parts "H₁", "H₂" of the first and second rail segments 120, 122. As will be described, it is preferred that the upper insert portion 239B has a cross-sectional area that is greater than the cross-section area of the respective head parts "H₁", "H₂" of the first and second rail segments 120, 122.

Once the lower insert portion 239A is secured in the gap 224, an upper surface 280 of the lower insert portion 239A is exposed (Fig. 3A). As can also be seen in Fig. 3A, the upper insert portion 239B includes a lower surface 282 that is configured to mate with the upper surface 280 of the lower insert portion 239A.

As shown, the first and second rail segments 220, 222 include respective first segment and second segment end faces 230, 232. The upper insert portion 239B also includes respective insert faces 240A, 240B that are formed to mate with the first and second segment end faces 230, 232 when the upper insert portion 239B is moved downwardly, (i.e., in the direction indicated by the arrow "B₃" in Fig. 3A), into the gap.

In one embodiment, heating elements 242A, 242B are positioned proximal to the insert faces 240A, 240B, for heating respective portions 244A, 244B (seen as upper insert heated portions) of the upper insert portion 239B to their hot working temperature. Heating elements 246, 250 are also located proximal to the first segment and second segment end faces 230, 232, for heating portions 248, 252 of the first and second rail segments 220, 222 (seen as first segment heated portion 248 and second segment heated portion 252) to their hot working temperature or temperatures. As described above, when the heated portions are at their hot working temperature or temperatures, they are at least partially plastically deformable. It will be understood that the heated portions and surfaces adjacent thereto preferably are covered by an inert atmosphere (not shown) when the heated portions are heated.

In one embodiment, the heating elements (not shown) may be positioned for heating additional portions or areas of the rail insert subassembly 238 that are proximal to the upper surface 280 of the lower insert portion 239A and the lower surface 282 of the upper insert portion 239B. Such additional heated portions are identified in Fig. 3A by reference characters 284, 286 respectively. When the heated portions 284, 286 are at their hot working temperature or temperatures, they are at least partially plastically deformable.

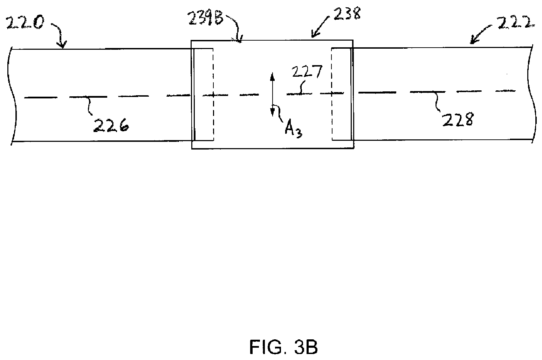

As can be seen in Fig. 3B, the rail segments 220, 222 define respective center lines 226, 228 thereof. The upper insert portion 239B also defines a center line 227 thereof.

When the heated portions are at their hot working temperature or temperatures, the heating elements are removed or withdrawn, and the upper insert portion 239B is subjected to an engagement motion. The engagement motion may be, for example, an oscillation in which the upper insert portion 238B is moved in the direction indicated by arrow "A₃" (Fig. 3B) with respect to the first and second rail segments 220, 222. It will be understood that the upper insert portion 239B is shown in Fig. 3B with its center line 227 initially aligned with the center lines 226, 228 for clarity of illustration before the engagement motion is initiated. However, those skilled in the art would appreciate that when the upper insert portion 239B is oscillated relative to the rail segments 220, 222, the center line 227 is generally unaligned with the center lines 226, 228.

While the heated portions are at their hot working temperature or temperatures and while the upper insert portion 239B is subject to the engagement motion, the upper insert portion 239B is also subject to a translocation motion, i.e., it is moved in the direction indicated by arrow "B₃" in Fig. 3A.

Once the insert faces 240A, 240B are engaged with the end faces 230, 232 and the lower surface 282 of the upper insert portion is engaged with the upper surface 280 of the lower insert portion, they are continuously urged together respectively, during the engagement motion. At least some of the metal in the heated portions is plastically deformed and subjected to shearing during the engagement motion.

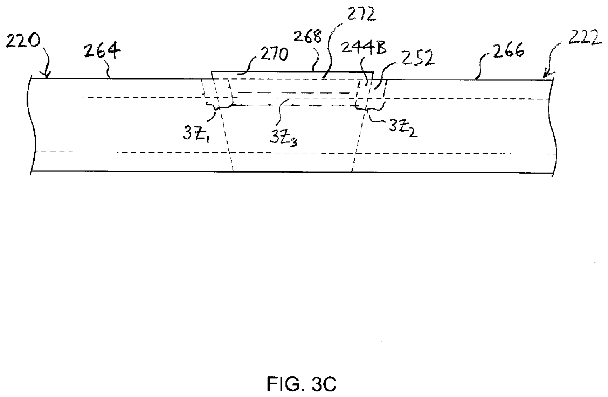

As described above, zones of bonded material are developed at or between the engaged surfaces. Such zones are identified in Fig. 3C by reference characters "3Z₁" - "3Z₃". It will be understood that the engaged surfaces are subsumed in the respective zones of bonded material. The metal in the bonded zones has a generally uniform microstructure, and it is believed that the uniform microstructure may be due to at least some of the metal in the heated portions having been subjected to shearing.

Alternatively, the upper insert portion 239B may be subjected to the translocation motion first (upon the heated portions being heated to their hot working temperature or temperatures), and the engagement motion may be commenced when the insert faces 240A, 240B engage the first segment and second segment engagement surfaces, and when the lower surface 282 engages the upper surface 280.

As noted above, in some embodiments, the upper insert portion 239B has a cross-sectional area (not shown) that is larger than the cross-sections of the head parts "H₁", "H₂", so that while the engagement motion continues, the insert faces 240A, 240B remain engaged with the engagement surfaces 230, 232. Similarly to another embodiment previously described, the metal that is excess may be removed after the upper insert portion 239B has become metallurgically bonded to the rail segments 220, 222 and to the lower insert portion 239A.

For example, as can be seen in Fig. 3C, when the upper insert portion 239B is first positioned in the gap 224 on the lower insert portion 239A and secured to the first and second segments 220, 222, an upper external surface 268 of the upper insert portion 239B extends outwardly beyond respective upper external surfaces 264, 266 of the rail segments 220, 222. An upper outer portion 270 of the upper insert portion 239B is removed to expose a modified upper external surface 272 of the upper insert portion 239B that is aligned with the upper external surfaces 264, 266. Those skilled in the art would appreciate that the outer portion 270 may be removed using any suitable method.

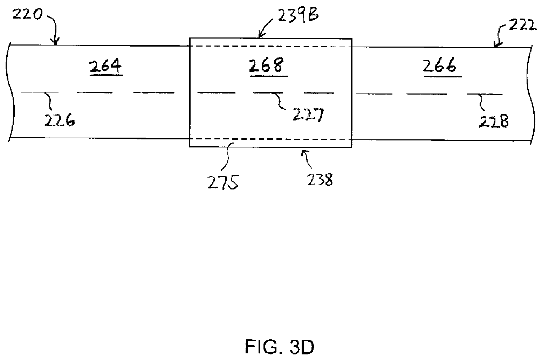

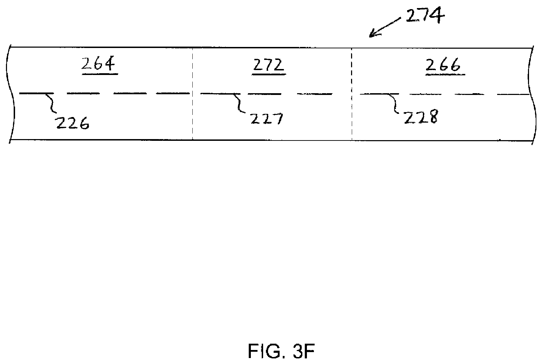

It will be understood that other excess portions of the upper insert portion 239B may also be removed. For example, as schematically shown in Fig. 3D, an excess side portion 275 of the upper insert portion 239B is shown that may be removed (Fig. 3F).

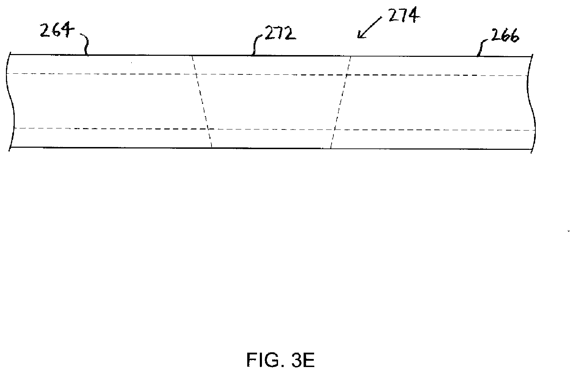

As can be seen in Figs. 3E and 3F, the foregoing embodiment of the method of the disclosure results in the first and second rail segments 220, 222 and the upper insert portion 239B being joined together to form an assembly 274 in which the modified upper external surface 272 and the upper external surfaces 264, 266 are aligned.

It will be understood that the lower insert portion 239A and the upper insert portion 239B may be made of different materials. In particular, the upper insert portion 239B may be made of a steel or another material that is harder or otherwise more durable than the material of the lower insert portion 239A.

It will be appreciated by those skilled in the art that the disclosure can take many forms, and that such forms are within the scope of the disclosure as claimed. The scope of the claims should not be limited by the preferred embodiments set forth in the examples, but should be given the broadest interpretation consistent with the description as a whole.

## Claims

1. A method of joining a first segment and a second segment that are positioned to define
a
gap therebetween, the method comprising:
providing an insert configured to fit in the gap, the insert including at least one insert face that is formed to mate with a first segment engagement surface of the first segment and a second segment engagement surface of the second segment;
heating an insert heated portion of the insert in an inert atmosphere to an insert hot working temperature;
heating at least one of a first segment heated portion to a first segment hot working temperature or a second segment heated portion to a second segment hot working temperature in an insert atmosphere;
while the insert heated portion and the at least one first segment heated portion or the second segment heated portion are at their hot working temperatures, subjecting the insert to an engagement motion, to move the insert relative to the first and second segments; and
while the insert heated portion and the at least one the first segment heated portion or the
second segment heated portion are at the hot working temperatures and while the insert is subjected to the engagement motion, subjecting the insert to a translocation motion, in which the insert is moved into the gap to engage said at least one insert face with the first segment and second segment engagement surfaces; and
allowing the insert and the first and second segments to cool, wherein the insert and the
first segment are bonded together across a first bonded zone that extends across said at least one insert face and the first segment engagement surface that are engaged with each other, and wherein the insert and the second segment are bonded together across a second bonded zone that extends across said at least one insert face and the second surface engagement surface that are engaged with each other.

2. The method of Claim 1 further comprising, before providing an insert:
shaping end faces of the first and second segments to provide the first and second segment engagement surfaces.

3. The method of Claim 2 wherein shaping end faces of the first and second segments to provide the first and second segment surfaces comprises:
shaping the end faces of the first and second segments to have a same angle relative to horizontal but oriented in opposite directions.

4. The method of any preceding claim wherein heating at least one of a first segment heated portion or a second segment heated portion in an insert atmosphere comprises:
heating both the first segment heated portion and the second segment heated portion with at least one heating element.

5. The method of any preceding claim wherein heating both the first segment heated portion and the second segment heated portion is via induction heating.

6. The method of any preceding claim wherein a cross-section of the at least one insert face is greater than a cross-section of the first segment engagement surface.

7. The method of any preceding claim wherein a cross-section of the at least one insert face is greater than a cross-section of the second segment engagement surface.

8. The method of any preceding claim further comprising:
removing material from the insert to align an external surface of the insert with an external surface of the first segment and an external surface of the second segment.

9. The method of any preceding claim wherein providing an insert configured to fit in the gap comprises:
providing a lower insert portion in the gap;
welding the lower insert portion to the first and second segments;
providing an upper insert portion wherein the upper insert portions includes the at least one insert face that is formed to mate with a first segment engagement surface of the first segment and a second segment engagement surface of the second segment.

10. The method of Claim 9 further comprising:
heating a lower surface of the upper insert portion and an upper surface of the lower insert portion in the inert atmosphere; and
connecting the lower surface of the upper insert portion and the upper surface of the lower insert portion via at least one of the engagement motion or translocation motion.
